# EUROPEAN PATENT SPECIFICATION

(11) **EP 0 458 533 B1**
(45) Date of publication and mention of the grant of the patent: **07.08.1996**
(21) Application number: 91304433.5
(22) Date of filing: 17.05.1991
(51) Int. Cl.: F28G 9/00, F28G 7/00, F22B 37/48

(54) **Chemical cleaning method for steam generators utilizing pressure pulsing**
Druckpulsierendes chemisches Reinigungsverfahren von Dampferzeugern
Méthode de nettoyage chimique des générateurs de vapeur par variation pulsatoire de pression

(30) Priority: 18.05.1990 US 524799; 26.10.1990 US 603487
(43) Date of publication of application: 27.11.1991
(73) Proprietor: WESTINGHOUSE ELECTRIC CORPORATION, Pittsburgh Pennsylvania 15222 (US)
(72) Inventor: Esposito, Judith Beth, Pittsburgh, PA 15218 (US); Auld, Gregg Daniel, Trafford, PA 15085 (US); Baum, Allen Jay, Pittsburgh, PA 15218 (US); Stenger, William Joseph, Export, PA 15632 (US)
(74) Representative: van Berlyn, Ronald Gilbert

(56) References cited:
- EP-A- 0 053 085
- EP-A- 0 155 568
- EP-A- 0 339 288
- US-A- 3 033 710
- US-A- 3 447 965
- US-A- 4 320 528
- US-A- 4 655 846
- US-A- 4 750 547
- PATENT ABSTRACTS OF JAPAN vol. 6, no. 50 (M-120) April 3, 1982 & JP-A-56 165 900 (KAWADA SHINKO) December 19, 1981

## Description

This invention generally relates to an improved method for removing sludge and corrosion products from the interior of a heat exchanger vessel, which may be a nuclear steam generator, wherein a series of pressure pulses is generated within a liquid chemical cleaning agent after it has been introduced into the vessel to enhance chemical cleaning by dislodging, dissolving and fluidizing sludge and corrosion products within the vessel.

Methods for chemically cleaning the interior of heat exchanger vessels such as nuclear steam generators are known in the prior art. However, before the purpose and operation of such cleaning methods may be understood, some basic understanding of the structure and maintenance problems associated with nuclear steam generators is necessary.

Nuclear steam generators generally comprise a bowl-shaped primary side through which hot, radioactive water from the reactor core is circulated, a secondary side disposed on top of the primary side into which non-radioactive water is fed, and a tubesheet which includes a number of U-shaped heat exchanger tubes disposed between the primary and secondary sides of the generator for thermally connecting but hydraulically insulating the primary and secondary sides so that heat from the radio-actively contaminated water in the primary side will be conducted to the non-radioactive water in the secondary side, thereby causing it to boil and to create non-radioactive steam.

The U-shaped heat exchanger tubes are contained within the secondary side of such steam generators. Each such heat exchanger tube is inverted, with its open ends mounted in the tubesheet and its legs and bent portion extending into the secondary side. A plurality of spaced apart support plates are provided in the secondary side for laterally supporting the legs of each heat exchanger tube. The legs of the U-shaped heat exchanger tubes extend through bores present in these support plates. Small, annular spaces are present between these heat exchanger tubes and the bores in the support plates and tubesheet through which these tubes extend. These annular spaces are known in the art as "crevice regions". Such crevice regions provide only a very limited flow path for the feed water that circulates throughout the secondary side of the steam generator, which in turn can cause the feed water to boil so rapidly in these regions that they can dry out. This chronic drying-out causes impurities in the water to plate out and collect in these crevice regions. These impurities may promote the occurrence of sludges and corrosion on the exterior surfaces of the tubes, and the resulting corrosion products can, over time, accumulate in the crevice to the point where they can actually dent the heat exchanger tubes. Even though the heat exchanger tubes are made from corrosion-resistant Inconel^{R} 600 or 690, if the resulting impurities and sludges are not removed, sufficient corrosion and stress can occur in the crevice region areas of these tubes to ultimately cause them to crack unless some sort of maintenance operation is undertaken. Since a cracked heat exchanger tube can cause radioactive materials from the primary side to contaminate the non-radioactive water in the secondary side of the generator, it is important that maintenance operations are implemented which prevent such corrosion and subsequent cracking from occurring.

An ultrasonic cleaner is disclosed in U.S. Patent No 4,320,528 titled "Ultrasonic Cleaner" issued March 16, 1982 in the name of Terry D. Scharton, et. al. This patent discloses a method and apparatus for cleaning and removing the buildup of products of corrosion, oxidation, sedimentation and comparable chemical reactions from various portions of heat exchanger systems.

Chemical cleaning methods were developed in the prior art to dissolve such sludge accumulation, and to ameliorate corrosion. In these methods, the nuclear steam generator is first taken out of service and completely drained of water from both the primary and the secondary sides. Next, as most of the corrosion products contained within the crevice regions are iron oxide and copper that have become tightly ensconced in the crevice regions or on the surfaces of heat exchanger tubes, chelate-containing iron removal solvents and copper removal solvents are sequentially introduced into the interior of the secondary side to dissolve and remove them. Such iron removal solvents typically include an aqueous mixture of EDTA (ethylenediaminetetraacetic acid), hydrazine, ammonium hydroxide (NH₄OH), and an inhibitor for retarding corrosion reactions between the metal surfaces in the generator and the EDTA. The copper solvent likewise includes an aqueous mixture of EDTA and NH₄OH, and further includes hydrogen peroxide (H₂O₂) and EDA (ethylene diamine). The iron removal solvents are typically circulated within the interior of the secondary side at a temperature of about 93.3°C, while the copper removal solvents are circulated at a temperature of about 100°F.

While such copper and iron solvents have proven to be effective in removing iron oxide and copper from the interior of the secondary side of a nuclear steam generator, they are also capable of promoting new corrosion within the steam generator despite the use of an inhibitor, particularly among the carbon steel and low alloy steel components of the generator. To minimize these corrosive effects, these solvents are typically provided with low concentrations of their active chelate ingredients. Specifically, the iron solvents are formed from a concentration of 150 grams per liter of EDTA in water, while the copper solvents are formed from a concentration of 50 grams per liter of EDTA. Unfortunately, it is now believed that such chemicals still induce a significant amount of corrosion on the metallic components within the generator, despite the use of such low concentrations. Moreover, the use of such low concentrations protracts the time it takes for these agents to work, and often necessitates exposing the interior of the secondary side to multiple solvent baths. For example, in one of the most common prior art cleaning methods, it is necessary to introduce and to remove an iron solvent twice within the steam generator, and to introduce and to remove a copper solvent as many as six times. Such multiple solvent baths, along with the various rinse cycles which they necessitate, can cause a single chemical cleaning operation of a steam generator to last one hundred and twenty hours or more. As a utility may typically lose one million dollars (U.S.) in revenues for each day of down time of a nuclear steam generator, it can readily be appreciated that the cost of such a state of the art cleaning operation is quite high, particularly when one considers that the total price of such an operation must also include the cost of the chemicals, and the setting up of the recirculation equipment. Further compounding these costs is the fact that the spent iron and copper solvents and rinse solutions that are removed from the radioactive interior of the secondary side of the generator constitute a large volume of radioactive liquid waste which must be disposed of. Thus the use of low concentration iron and copper solvents only partially solves the problem of unwanted, solvent-induced corrosion while significantly enlarging the time, expense and waste volume associated with the cleaning operation.

Still another shortcoming associated with chemical cleaning operations is the fact that such operations may not be entirely effective in removing tightly ensconced iron oxide and copper impurities from all of the numerous crevice regions within the secondary side of the generator. The applicants have observed that part of this ineffectiveness results from the fact that tightly packed impurities in small spaces do not give the chemical solvent sufficient opportunity to penetrate and to come into contact with large areas of the surface of such impurities. The applicants have reason to believe that the insoluble fractions of the sludge and other impurities collect as residues at the surfaces of these tightly ensconced deposits during the cleaning operation and hinder the penetration of the chemical cleaning solution beyond the surface of the deposit, thereby stopping or at least significantly retarding the dissolution of the deposits in the crevice regions.

Clearly, what is needed is an improved chemical cleaning method which reduces the probability that the cleaning agents would promote the occurrence of new corrosion within the steam generator. Ideally, such a method would be faster, and not generate the large volumes of liquid waste associated with the prior art.

The invention consists in a method for removing sludge and corrosion products (32) from the interior of a heat exchanger vessel (1) of the type wherein a liquid chemical cleaning agent is effective to remove such sludge and corrosion products when introduced into said vessel (1) and maintained for a residence time of between 13 and 70 hours and then removed, wherein the method comprises the steps of introducing and maintaining a chelate-containing iron agent within the interior of said vessel (1) at a temperature of between about -12.2°C (10°F) and 10°C (50°F) to prevent said agent from corroding said vessel; generating a series of pressure pulses within the liquid agent after said agent has been introduced into the interior of said vessel (1) to create shock waves in said liquid to dislodge, dissolve and fluidize said sludge and corrosion products (32); and removing said liquid chemical cleaning agent after said normal residence time.

More specifically, the invention is an improved method for chemically removing sludge and corrosion products from the interior of a heat exchanger such a nuclear steam generator that eliminates or at least ameliorates the aforementioned limitations associated with the prior art. In many prior art chemical cleaning processes, it is necessary to introduce and to circulate a chelate-containing cleaning agent at temperatures up to 93.3°C or higher for residence times of anywhere between 13 and 70 hours. In the improved method of the invention, a series of pressure pulses is generated within the liquid cleaning agent while the agent is being recirculated within the interior of the heat exchanger vessel in order to create shock waves in the liquid to dislodge, dissolve and fluidize the sludge and corrosion products. The enhancement of the cleaning action that results from the pressure pulses allows the chelate-containing cleaning agents to be circulated at temperatures of between -12.2°C (10°F) and 10°C (50°F) less than the temperatures necessary for chemical cleaning alone. It is believed that the rate of chemical reactions between the chelates in the cleaning agents and the metallic surfaces within the heat exchanger vessel is cut in half for every -7.8°C (18°F) reduction in the temperature of the cleaning agent. Therefore, the amount of unwanted corrosion will be reduced by lowering the solvent temperature.

In an alternate method of the invention, the operating temperatures of the chelate-containing cleaning agents remain the same, while the concentration of the chelates in these agents is reduced. The lower concentration of chelates would, again, reduce the amount of unwanted corrosion products between these chelates and the metallic walls of the heat exchanger vessel. While this particular embodiment of the method may not reduce unwanted corrosion to the same extent as the first embodiment of the method, it has the advantage of lowering the volume of radioactive chelate waste which must be dealt with. Additionally, both embodiments of the method of the invention may be combined, wherein cleaning agents having a lower concentration of chelates are circulated within the heat exchanger vessel at a lower temperature than would be required if chemical cleaning alone were being used. Either or both methods of the invention may be combined with lower residence times for the cleaning agents to be circulated within the vessels being cleaned, which would have the advantage of requiring fewer down-time days for the utility to clean the heat exchanger vessels of its steam generators. Finally, the number of times that the copper removal solvent must be introduced and removed from the heat exchanger vessel is reduced in both embodiments of the method, which not only shortens the total amount of time required to complete the cleaning operation, but which also results in the production of less radioactively contaminated liquid waste than if chemical cleaning per se were used.

In the preferred method of the invention, the chemical cleaning agent is simultaneously recirculated through a filtration system located outside of the vessel of the heat exchanger while pressurized pulses of gas are introduced into the cleaning agent within the vessel. Such recirculation and filtration advantageously removes fluidized sludge and corrosion products from the agent during the cleaning operation, thereby denying them the opportunity to re-settle back down onto the tubesheet or crevice regions within the heat exchanger, which in turn would interfere with the chemical cleaning of the surfaces. When rinsing agents are used to remove residual cleaning agents from the interior of the heat exchanger vessel, the same recirculation and pressure pulsing is preferably simultaneously implemented to remove further amounts of un-dissolved and fluidized sludge and corrosion products. Such pressure pulsing and recirculation further enhances the ability of such rinsing agents to thoroughly penetrate all of the crevice regions of the heat exchanger vessel.

The improved chemical cleaning method may further include the step of generating the pressure pulses in the chemical agent contained within the heat exchanger vessel with an oxygen containing gas whenever a cleaning agent requiring chemical oxidation is used, such as the copper cleaning solvent EDTA.

The pressure pulses are preferably created by injecting pulses of gas into the liquid chemical agent at a pressure of between about 2.07 and 6.21 MPa, the pressure increasing as the chemical cleaning agent fills the vessel. The use of such pressures insures the creation of near-explosive shock waves and liquid displacement which are capable of breaking up encrustations of sludge and corrosion products in the crevice regions of the heat exchanger vessel, which in turn helps the chemical cleaning agent to envelope and dissolve or at least dislodge and fluidize these materials.
Figure 1 is a cross-sectional side view of a steam generator and a generalized, schematic diagram of the recirculation system used in connection with the improved chemical cleaning method of the invention;
Figure 2A is a cross-sectional side view of one of the heat exchanger tubes used in the steam generator illustrated in Figure 1, showing how this tube extends through a bore in a support plate, and how sludge and corrosion products accumulate in the annular space between the tube and the bore in the support plate;
Figure 2B is a plan view of the heat exchanger tube illustrated in Figure 2A along the line 2B-B, and
Figure 3 is a more detailed schematic diagram of the recirculation system used to implement the method of the invention.

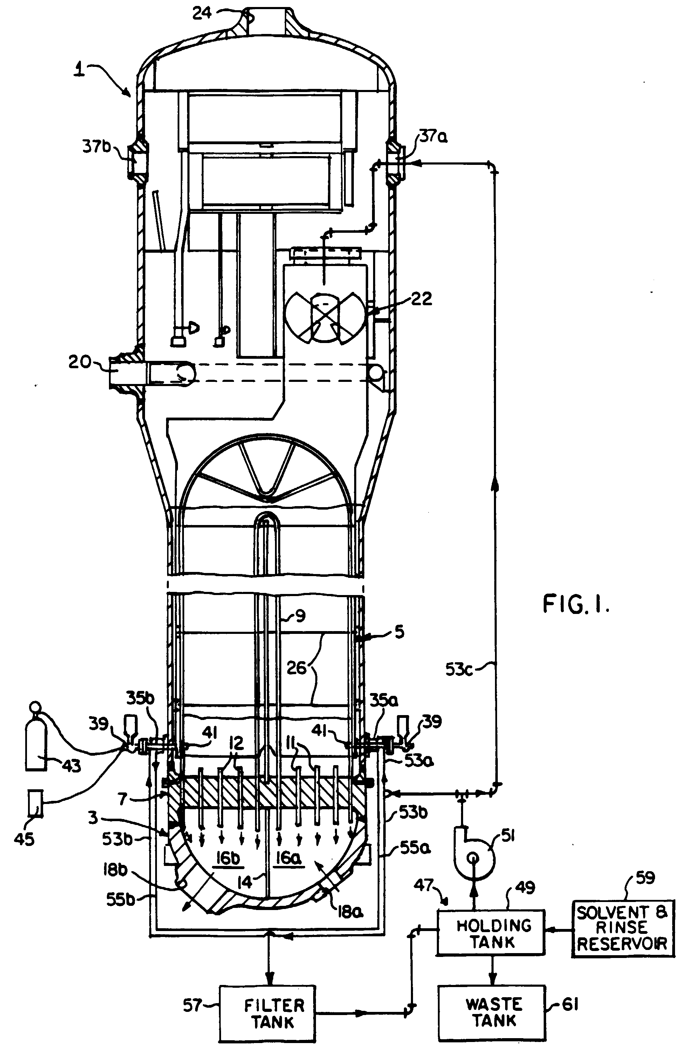

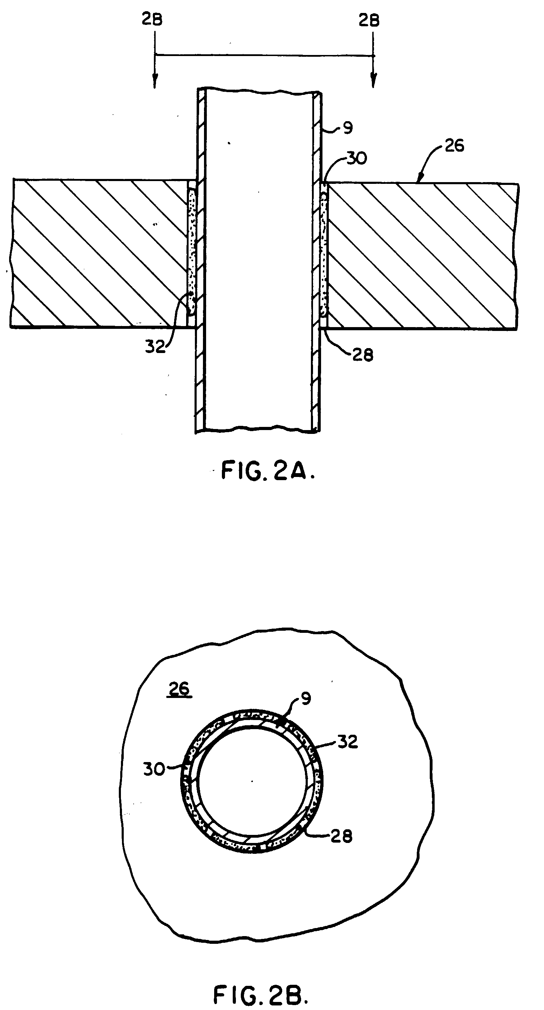

With reference now to Figure 1, the improved chemical cleaning method of the invention is particularly useful in cleaning the interior of a nuclear steam generator 1. Such generators 1 include a bowl-shaped primary side 3 at their bottom portions, and a cylindrically shaped secondary side 5 in their middle portions which are hydraulically separated by means of a tubesheet 7. Heat is conducted from the primary side 3 to the secondary side 5 through a number of heat exchanger tubes 9, each of which is shaped like an inverted U. Each tube 9 includes an inlet end 11 and an outlet end 12 which are mounted in bores in the tubesheet 7. A divider plate 14 divides the bowl-shaped primary side 3 into two quadrispherical chambers known as channel heads 16a,b in the art. The inlet ends 11 of all of the heat exchanger tubes 9 communicate with the right-hand channel head 16a, while the outlet ends 12 of all of these tubes 9 communicate with the left-hand channel head 16b. Manways 18a,b afford access to the channel head 16a,b respectively. In the secondary side, a feed water inlet 20 is provided for admitting non-radioactive and purified water over the bundle of U-shaped heat exchanger tubes 9 so as to immerse the same. Disposed above these tubes 9 is a steam drying assembly 22 which captures and returns water vapor entrained in the steam created by the generator 1 back into the feed water that immerses the heat exchanger tubes 9. An outlet port 24 at the top of the steam generator 1 conducts dry steam to the blades of a turbine that is connected to an electrical generator (not shown). Finally, a number of vertically spaced support plates 26 are disposed along the length of the secondary side 5 of the steam generator 1 for laterally supporting the legs of the U-shaped heat exchanger tubes 9. As is best seen in Figures 2A and 2B, each of these support plates 26 includes a plurality of bores 28 through which the heat exchanger tubes 9 extend.

In operation, hot radioactive water from the reactor core (not shown) is admitted into the channel head 16a, and from thence flows upwardly into the inlet ends 11 of each of the heat exchanger tubes 9. This hot water flows upwardly through the inlet legs of each of the tubes 9 (known as hot legs in the art), continues flowing around the bend of each of the tubes 9, and from there flows down through the outlet legs (known as cold legs) and from thence out through the outlet ends 12 of the heat exchanger tubes 9 and into the outlet channel head 16b, where it is ultimately recirculated back to the core of the reactor.

The hot, radioactive water from the primary side transfers much of its heat through the walls of the heat exchanger tubes 9 and into the non-radioactive water that surrounds these tubes 9. This causes the non-radioactive water to boil, and to create the steam which is ultimately conducted out of the outlet port 24 of the steam generator 1.

The manner in which sludge and corrosion products accumulate in the crevice regions of the steam generator 1 is best understood with reference to Figures 2A and 2B. Between the heat exchanger tubes 9 and the bores 28 in the support plates 26 is a narrow, annular space 30. This annular space 30 provides a relatively constricted flow path for the non-radioactive water that is in a constant state of circulation around these tubes 9 during the operation of the steam generator 1. The resulting limited circulation can allow water to boil out of the space faster than the surrounding ambient water can re-envelope the heat exchanger tube 9. As a result of this "dry boiling", any impurities present in the water in the secondary side are plated out onto the surfaces of this narrow annular space 30, forming deposits of sludge and debris 32. As this sludge and debris 32 accumulates, recirculation through the annular space 30 is further retarded, which in turn accelerates the accumulation of even more sludge and debris 32 in this region. Ultimately, such sludge and debris 32 can completely fill the annular space 30. Chemical analysis has shown that the primary components of the sludge and debris 32 include magnetite (Fe₃O₄), elemental copper, and copper oxide. Such sludge and debris accumulations can promote the occurrence of corrosion in the outer walls of the heat exchanger tubes 9 in the vicinity of the support plates 26, which in turn may cause these tubes 9 to crack, thereby contaminating the non-radioactive water of the secondary side 5 with the hot, radioactive water from the primary side 3 of the generator 1. The same destructive phenomenon can also occur in the annular spaces (not shown) between the bores in the tubesheet 7, and the outer walls of the heat exchanger tubes 9 that extend through these bores.

One of the principal purposes of the chemical cleaning method of the invention is to remove such sludge and debris 32 from crevice regions such as the annular space 30, along with the products of any corrosion which the sludge might have started. To this end, the method of the invention involves the generation of pressure pulses in liquid chemical cleaning agents introduced into the secondary side 5 of the steam generator 1 in order to loosen, dislodge and fluidize such sludge and debris 32 while the active compounds within the chemical cleaning agent dissolve the magnetite and copper compounds within such debris.

Figure 1 illustrates the best mode of implementing the method of the invention, wherein both pressure pulse generators and a chemical recirculation system are installed within the lower hand holds 35a,b and upper manways 37 of the nuclear steam generator 1. More specifically, a pressure pulse generator 39 having a nozzle 41 for emitting a pressurized pulse of gas is detachably secured within each of the lower hand holds 35a,b. A source of pressurized gas 43, which may be a compressed bottle of nitrogen or air, is connected to each of the pressure pulse generators 39, as is a pulser control unit 45 which periodically actuates the pulser generator 39 to discharge a volume of compressed nitrogen through the nozzle 41. In the preferred method, each of the pressure pulse generators 39 is a PAR 600 B air gun and the pulser control unit 45 is a model FC100 controller. Additionally, while the nozzles 41 are schematically illustrated as being horizontally oriented, they are more preferably canted at a 30° angle with respect to the upper surface of the tubesheet 7 so as to minimize the momentary forces that the shock waves created by the pulses of gas apply to the heat exchanger tubes 9 nearest the open ends of the nozzle 41. Preferably, the firing cylinder of each of the pressure pulse generators 39 contains between 1,262.8 and 1,638.7 cubic centimeters of pressurized gas.

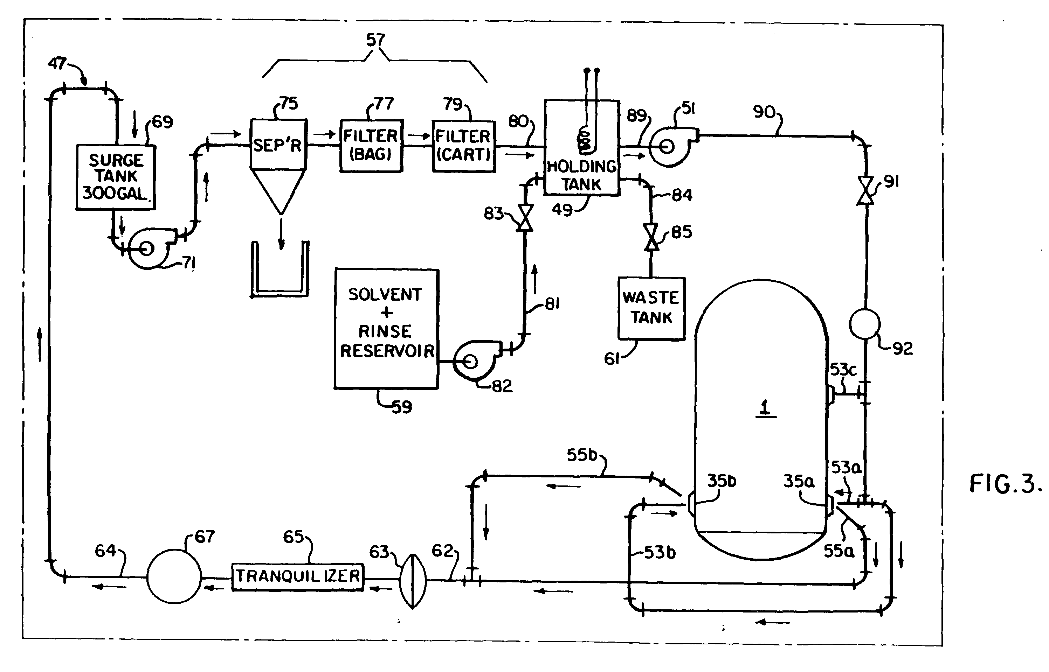

With reference now to both Figures 1 and 3, the recirculation system 47 that is preferably used to implement the method of the invention generally comprises a holding tank 49 for holding and heating the liquid chemical cleaning agents circulated through the secondary side 5 of the generator 1, a circulation pump 51 for creating the pressure differential necessary to circulate such cleaning agents into and out of the secondary side 5, and three inlet conduits 53a,b,c for introducing the liquid chemical cleaning agent through the hand holds 35a,b and upper manways 37 of the secondary side 5. Further included are a pair of outlet conduits 55a,b for removing liquid chemical cleaning agents from the interior of the secondary side 5, a filter bank 57 for removing undissolved sludge and debris entrained in the liquid agents removed from the secondary side 5, a solvent and rinse reservoir 59 for supplying chemical cleaning agents such as iron and copper solvents to the holding tank 49, as well as rinsing and passivation agents, and a waste tank 61 for collecting spent chemical agents from the holding tank 49.

Figure 3 illustrates the recirculation system 47 in more detail. Specifically, outlet conduits 55a,b converge into a single inlet conduit 62 which in turn is connected to a diaphragm pump 63. The use of a diaphragm-type pump 63 is preferred at this point in the recirculation system 47 since the liquid cleaning agent withdrawn through the outlet conduits 55a,b may include large particles of suspended sludge and debris which, while easily handled by a diaphragm-type pump, could damage or even destroy a centrifugal or positive displacement pump. The outlet of the diaphragm 63 is connected to the inlet of a tranquilizer 65 by way of conduit 64. The purpose of the tranquilizer 65 is to even out the pulsations in the liquid chemical agent created by the diaphragm pump 63 so that a flow meter 67 located downstream of the tranquilizer 65 can reliably indicate the rate of flow of liquid chemical cleaning agent through the conduit 64. Located downstream of flow meter 67 is a surge tank 69. The purpose of the surge tank 69 is to accumulate the flow of liquid cleaning agent generated by the diaphragm pump 63 and to smoothly deliver it to the inlet of recirculation pump 71. The pump 71 in turn generates a sufficient pressure head in the recirculating chemical agents to drive it through the filter bank 57, which includes a cyclone separator 75, a bag filter 77, and a cartridge filter 79. When the agent enters the filter bank 57, a substantial portion of the sludge and other debris suspended in the agent is centrifugally flung out of the agent as it flows through the cyclone separator 75. Located downstream of the cyclone separator 75 is the one to three micron bag filter 77 that is serially connected to the one micron cartridge type filter 79. These filters 77 and 79 remove any small particulate matter which still might be suspended in the agent after it passes through the cyclone separator 75.

A conduit 80 connects the filter bank 57 to the inlet of the previously mentioned holding tank 49. As is schematically illustrated in Figure 3, the holding tank 49 includes at least one heater coil for heating the recirculating chemical agent to a desired temperature. As has been previously indicated, the holding tank 49 is connected to a solvent and rinse reservoir 59 by means of a conduit 81. A pump 82 is provided in the conduit 81 for generating the pressure differential necessary to transfer the contents of the reservoir 59 into the holding tank 49. A valve 83 is further provided in the conduit 81 for regulating the flow of fresh cleaning agents or rinsing agents into the holding tank 49. The waste tank 61 is connected to the holding tank 49 by means of a conduit 84. If the level of liquid within the waste tank 61 can be made to be lower than the level of liquid in the holding tank 49, no pump is necessary in the conduit 84 as the contents of the tank 49 can be made to drain into the tank 61. A valve 85 is provided in the conduit 84 to control the rate of such draining. The purpose of the waste tank 61 is to remove spent cleaning and rinsing agents from the holding tank 49, and to temporarily "park" these agents until such time as they may be disposed of properly. Finally, the holding tank 49 communicates with the previously mentioned recirculation pump 51 by way of an outlet conduit 89. The outlet of the pump 51 is in turn connected to outlet conduit 90 which communicates with the previously mentioned generator inlet conduits 53a,b,c by way of another flow meter 92. While the holding tank 49 is shown as being a single tank, it may in fact comprise two or more heated tanks that separately contain and heat the different cleaning solvents used in the method of the invention.

In the first step of the method of the invention, the steam generator 1 is taken off line and all water is drained out of both the primary and secondary sides 3,5. Next, a technique known in the art as sludge lancing is employed to remove loose deposits of sludge that have accumulated over the tubesheet 7 of the steam generator 1. Sludge lancing involves the use of a high velocity jet of water to dislodge and flush out this sludge. There are two advantages associated with the implementation of a sludge-lancing step at this juncture. First, the removal of the 76.2 to 101.6 centimeters of sludge that is typically present over the tubesheet 7 prior to the initiation of the chemical cleaning steps of the method allows the chemical cleaning agents to have at least some access to the crevice regions of the tubesheet 7. Without such sludge-lancing, the thick layer of sludge that is normally present at this location would effectively insulate the tubesheet 7 from such cleaning agents. A second advantage that follows from such sludge lancing is that the potency of the active chelate compounds in the chemical cleaning agents is not unnecessarily wasted on metals and metal compounds that can be relatively easily and quickly removed by mechanical cleaning techniques. This in turn allows the chemical strength of these compounds to be concentrated at the crevice regions in the tubesheet and at the support plate interfaces within the secondary side 7, where such strength is needed most.

After the sludge lancing step has been completed, one or more chemical cleaning agents is introduced into the interior of the secondary side 5 of the steam generator 1. In the instant example of the method of the invention, a chelate-containing iron solvent is first introduced into the secondary side 7, followed by at least one iron solvent rinse, which is in turn followed by a chelate-containing copper solvent. After such a copper solvent has been applied, a copper rinse is used to remove residual traces of the chelate-containing copper solvent, which in turn is followed by a final cleanup rinse. After all of the cleanup rinse has been removed from the interior of the secondary side, a passivation agent is finally introduced into the secondary side 5, whose purpose is to build up a thin, protective layer of oxide on all of the metal surfaces within the secondary side 5 so as to render them more resistant to corrosion. As will be described in more detail shortly, pressure pulsing is performed during the introduction and removal of each solvent and rinse agent in order to advantageously contract the time required for the chemical cleaning of the secondary side 5.

In this example, the sludge deposits are assumed to be heavy, and the composition of the sludge in the secondary side 5 is assumed to be between 70-80% by weight iron compounds, and 20-30% by weight copper compounds. Moreover, the composition, concentration, and temperatures of the iron and copper solvents, iron and copper rinses, cleanup rinse and passivation agent are as follows:

**TABLE 1**

| Iron Solvent | Iron Rinse |
|---|---|
| 150 ± 20 g/L EDTA 1.0 ± 0.2% Hydrazine pH 6.8 ± 0.2 with NH₄OH 0.75 ± 0.1% CCI-801 150 ± 5°F (65 ± 2°C) | pH 10.0 ± 0.2 with NH₄OH Used for Cooldown |

| Copper Solvent | Copper Rinse |
|---|---|
| 50 ± 10 g/L EDTA pH 7.0 ± 0.5 with NH₄OH pH 9.5 ± 0.2 with EDA 3.0 ± 0.2% H₂O₂ 90 ± 5, (32 ± 2°C) | 10 ± 5 ppm Hydrazine pH 10.0 ± 0.2 with NH₄OH Used for Heatup |

In the next step of the method of the invention, an iron solvent whose composition is set forth above is transferred from the solvent and rinse reservoir 59 to the holding tank 49 via conduit 81 by opening valve 83 and actuating pump 82. The heater coil within the holding tank 49 is actuated to bring the temperature of the iron solvent to about 65.6°C. As soon as the desired temperature is attained, valve 91 is opened, and recirculation pump 51 is actuated so that the heated iron solvent is conducted through the outlet conduit 90, through flow meter 92 and finally into inlet conduits 93a,b,c. As soon as the level of the iron solvent within the secondary side 5 of the steam generator 1 is high enough to completely immerse the nozzle 41 of each of the pressure pulse generators 39 under approximately three feet of liquid, the pressure pulse generators 39 are discharged at a rate of once every 7-15 seconds (and preferably about once every ten seconds) in order to discharge a pressurized pulse of nitrogen or other inert gas into the iron solvent at a pressure of about 4.14 MPa.

As the level of the iron solvent rises, the discharge pressure used in the pressure pulse generators 39 is increased to about 6.21 MPa when the level of the iron solvent within the secondary side 5 has reached its highest level, at which time it substantially submerges all but the bent portions of the U-shaped heat exchanger tubes 9. The iron solvent is then allowed to circulate through the recirculation system 47 while at its maximum level within the secondary side 5 for a period of between about 9 and 66 hours. All during this time, the pressure pulse generators 39 continue to discharge pulses of pressurized nitrogen in the iron solvent circulating within the secondary side 5 at a frequency of about once every ten seconds. Finally, the iron solvent is drained from the secondary side 5 by accumulating it within the holding tank 51 and then discharging it into the waste tank 61 through conduit 84 and valve 85. All during this time, the pressure of the gas used in the pressure pulse generators 39 is lowered from 6.21 to about 4.14 MPa until there is only about 914.4 cm of solvent standing over the nozzles 41 of the generator 39.

The fact that the temperature of the iron solvent has been decreased from 93.9°C to 65.6°C all during the time that the iron solvent is introduced, recirculated and drained out of the secondary side 5 of the steam generator 1 greatly reduces the probability that the EDTA within the iron solvent will induce unwanted corrosion within the steam generator, particularly on the carbon steel and low alloy steel components within the secondary side 5. According to classical reaction kinetics as described by the Arrhenius equation, for every 7.8°C (or 18°F) rise in temperature, a chemical reaction rate doubles. Accordingly, the rate that the iron solvent reacts with the metallic components within the secondary side of the steam generator 1 is cut by 50% when the iron solvent cleaning step is performed at 83.3°C, instead of 93.3°C, and by 75% when the cleaning step is performed at 73.3°C, and by almost 85% when this cleaning step is performed at 65.6°C. This is a substantial advantage, as it is now suspected that a source of a significant portion of the dissolved metals in the iron solvent may be a corrosion product directly attributable to the iron solvent cleaning operation. Of course, the benefit of temperature reduction for corrosion control should be weighed against the less desirable effect of decreased reaction rate between the iron solvent and sludge or deposits. However, the simultaneous use of pressure pulsing more than makes up for this decreased reaction rate.

After the iron solvent has been completely removed from both the secondary side of the generator 1 and the holding tank 49, an iron solvent rinse having a composition as previously described is admitted into the holding tank 49 and from thence into the interior of the secondary side 5. The purpose of the iron solvent rinse is to remove any residual amounts of iron solvent which still may be present within the secondary side 5. For this purpose, the heating coil within the holding tank 49 is deactuated, so that the rinse is admitted into the generator 1 at ambient or only a moderately elevated temperature (35°-60°C) in order to cool down the secondary side 5 in preparation for the admission of the copper solvent. The filling and draining of the secondary side 5 with the iron solvent rinse is preferably achieved within four to eight hours. Again, the pressure pulsers 39 are operated in the same manner as described with respect to the iron solvent from the time that the nozzle 41 of each is covered by about 914.4 cms of rinse during the filling operation to the time when the level of the rinse falls back to this level when the rinse is removed from the secondary side 5. While the use of pressure pulse generators does not significantly contract the time expended for the iron solvent rinsing step over the prior art in this embodiment of the method of the invention, the use of the pressure pulse generators 39 during this step advantageously continues to dislodge, fluidize and remove particles of sludge which would otherwise remain in the secondary side 5 if no pressure pulsing were administered.

In the next step of the method of the invention, a copper solvent is admitted from the solvent and rinse reservoir 59 to the holding tank 49. This solvent is preferably heated to a temperature of approximately 37.8°C before being admitted into the secondary side 5 of the steam generator 1. While it would be possible to heat the solvent to a lower temperature (i.e., 32.2°C) before admitting it into the secondary side 5 of the steam generator 1, such a procedure is not preferred since the extent to which the copper cleaning solvent is prone to attack the metallic surfaces within the secondary side 5 is relatively small, relative to the iron solvent cleaning step, due to the lower concentration of EDTA and higher pH. Accordingly, in the preferred method of the invention, neither the concentration of EDTA in the copper solvent, nor its temperature is reduced. However, because of the enhancement of the cleaning action afforded by the simultaneous pressure pulse cleaning of the secondary side 5, the copper cleaning step can be shortened to between four and sixteen hours. The four to sixteen hour length of this step of the method contrasts favorably with the six to 24 hours normally required for a copper solvent bath. Such substantial shortening of time advantageously results from the loosening, dislodgment and fluidization of the insoluble components of the sludge, corrosion products, and other debris as the chelate within the copper solvent dissolves the elemental copper component of the sludge and debris, thereby giving the copper solvent continuous free access to the sludge being removed. This is a particularly important mechanism in the crevice region such as the previously described annular space 30 between the heat exchanger tubes 9 and the bores 28 within the support plates 26, where the static retention of the insoluble components of the sludge and other debris can retard if not stop all together the dissolution of the elemental copper by the copper solvent. A related mechanism which is further believed to accelerate the removal of not only elemental copper, but elemental iron and magnetite during the iron removal step is the fact that the shock waves generated by the pressure pulse generator 39 are capable of cracking or otherwise generating fissures in the accumulations of sludge and debris that are initially dislodged and fluidized by these pulses. The generation of such cracks and fissures increases the amount of surface area within these accumulations that comes into contact with the copper solvent and iron solvent, thereby hastening its dissolution. Other helpful mechanisms include the continuous circulation of the copper (or iron) within the secondary side 5 by the recirculation system 47, coupled with the continuous, localized agitation of the solvent by the pressure pulse generators 39. The agitation that results from these activities presents any localized areas of depleted solvent from occurring in any of the areas in the secondary side 5 which promote poor circulation, such as the previously described crevice regions. Still another speed enhancing mechanism is the fact that the agitation of the solvent afforded by the pressure pulse generators 39 helps to mechanically promote the dissolution of hard-to-dissolve components within the sludge and other debris. The aggregate effect of all these advantageous mechanisms not only shortens the amount of time necessary to conduct the copper solvent bath, it further advantageously obviates the need for between two and six other separate copper baths in the secondary side 5 of the generator for heavy sludge deposits that are 20-30% by weight copper or copper compounds.

After both the secondary side 5 and the holding tank 49 have been drained of copper solvent, a copper solvent rinse having a composition as previously described as admitted into the secondary side, allowed to circulate, and finally removed the entire procedure taking between four and eight hours. Again, while there is no significant contraction in the amount of time allocated for the copper rinsing step as compared to the prior art, significantly greater amounts of sludge, debris and corrosion products are removed during the copper rinse step of the invention due to the continuous operation of the pressure pulse generator 39 and the continuous recirculation of the rinse by the recirculation system 47 and the continuous removal of these materials from the rinse by the filter bank 57.

After both the secondary side 5 and the holding tank 49 have been drained of copper rinse, a final cleanup rinse having a composition as previously set forth is admitted into the secondary side 5, where it is recirculated and removed. The total amount of time allocated to this step is four to eight hours, which, like the copper rinse step, is not significantly different prior art chemical cleaning processes. However, as was the case with both the copper rinse and iron rinse steps, the continuous operation in the pressure pulse generator 39 during this step again results in the removal of significantly greater amounts of sludge, debris and corrosion products from the interior of the secondary side 5 than the prior art.

In the final step of the chemical cleaning method of the invention, a passivation agent is admitted, recirculated and removed from the secondary side 5. The composition of this agent is as has been previously described and its purpose is to create a protective, thin oxide coating on all the exposed metal surfaces within the secondary side 5 in order to retard the occurrence of future corrosion. The total amount of time taken for this step is preferably between 24 and 36 hours. Again, while there is no significant reduction in the amount of time required in the passivation step of the invention versus the passivation step of prior art chemical cleaning methods, the continuous use of the pressure pulse generators 39 during this step, coupled with the continuously recirculation of the liquid agent for the filter bank 57 again results in the removal of significantly greater amounts of sludge and debris and corrosion products than is associated with the prior art.

Wile the chemical cleaning method of the invention has been described within the context of the most popular and widely accepted iron and copper solvents in use in the United States today in conventional chemical cleaning methods, it should be noted that it is generally applicable to any chemical cleaning method which employs chelates such as 5-20% aqueous mixtures of EDTA, or organic acids such as the 2-10% mixtures of NTA (nitrilo triacetic acid). The method is further applicable, but not limited to, the following aqueous mixtures of chemicals for dissolving iron, copper and magnetite:

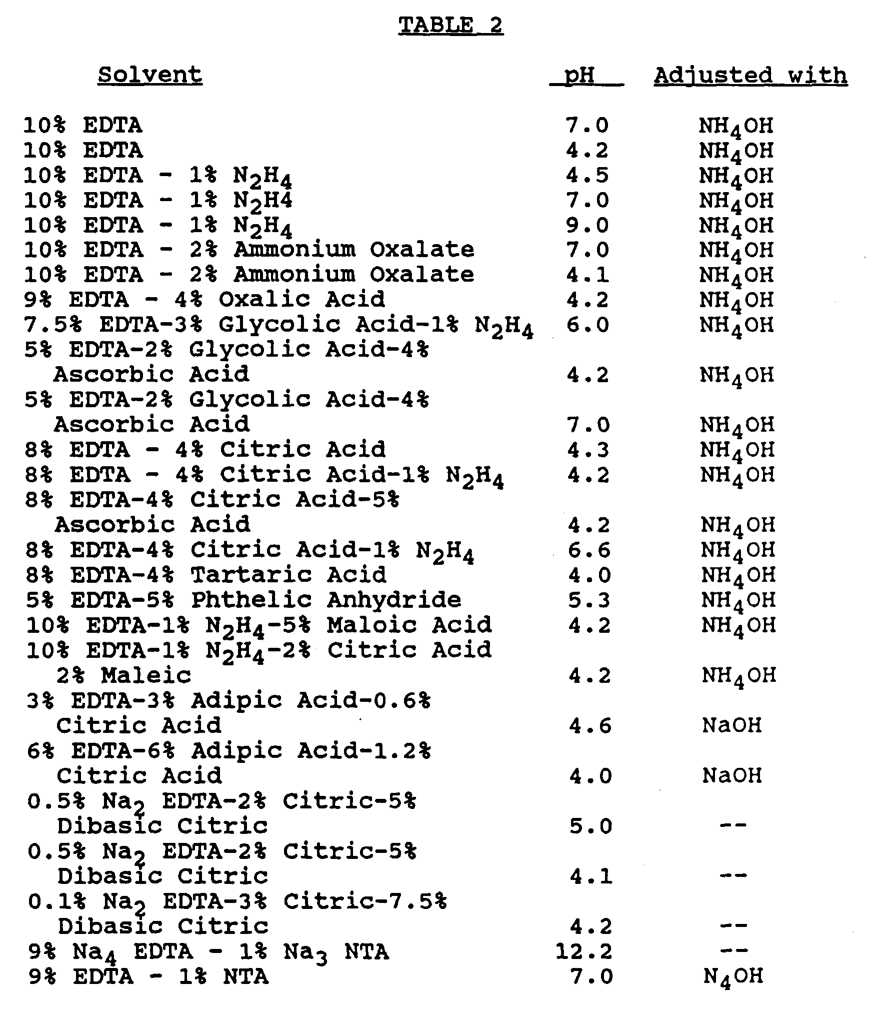

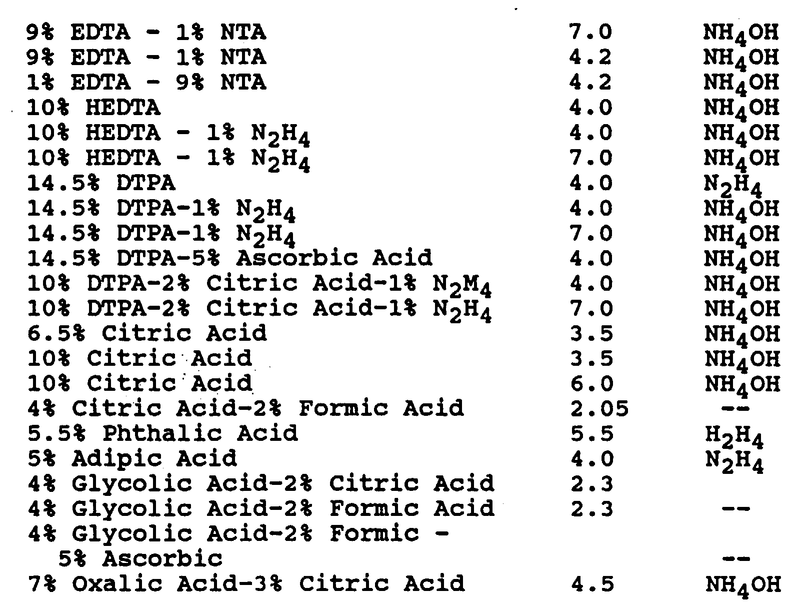

In an alternate method of the invention, the concentration of the EDTA in the iron solvent might be reduced to somewhere between 50-90% of the 150 ± 20 grams per liter concentration set forth in Table 1. In this alternate method of the invention, the iron solvent is recirculated at the approximately 93.3°C temperature associated with prior art chemical cleaning methods while the secondary side 5 of the steam generator 1 is subjected to pressure pulse cleaning. Like the previously described first embodiment of the method of the invention, this second embodiment affords a significant reduction in the amount of unwanted corrosion induced within the metallic walls of the secondary side 5 by the iron solvent, due to the reduction in the concentration of the EDTA in this solvent. But even more importantly, this particular method advantageously reduces the volume of radioactively contaminated EDTA which must later be disposed of after the iron-cleaning step has been completed. When this particular embodiment of the method is employed, the copper cleaning step remains the same as has been described with respect to the first embodiment of the method of the invention, as any significant reduction in the concentration of the EDTA to remove copper would disproportionately impair the ability of the copper cleaning solvent to perform its function.

It should further be noted that the type of solvents used (i.e., whether iron or copper), and the number and sequence of solvent baths and rinses employed will depend upon the composition and amount of sludge and corrosion products. For sludge having less than 5% by weight of copper and copper compounds, it may not be necessary to separately administer a copper solvent at all. For sludges having very high percentages of copper compounds (30-60%), more than one copper solvent bath may be necessary. The number of solvent baths will also depend upon the amount of sludge present within the crevice regions. Hence generators with heavy sludge deposits (i.e., over 272 Kg. in the secondary side), will require a greater number of baths of all solvents in generators having light sludge deposits (i.e., less than 136 Kg.). However, in all cases, the number of copper baths required will be at least half as much as would normally be required without the simultaneous use of pressure pulsing.

## Claims

1. A method for removing sludge and corrosion products (32) from the interior of a heat exchanger vessel (1) of the type wherein a liquid chemical cleaning agent is effective to remove such sludge and corrosion products when introduced into said vessel (1) and maintained for a residence time of between 13 and 70 hours and then removed, wherein the method comprises the steps of:
introducing and maintaining a chelate-containing iron agent within the interior of said vessel (1) at a temperature of between about -12.2°C (10°F) and 10°C (50°F) less than 93.3°C (200°F) to prevent said agent from corroding said vessel;
generating a series of pressure pulses within the liquid agent after said agent has been introduced into the interior of said vessel (1) to create shock waves in said liquid to dislodge, dissolve and fluidize said sludge and corrosion products (32); and
removing said liquid chemical cleaning agent after said normal residence time.

2. A method as defined in claim 1, wherein the method is of the type that involves introducing a liquid chemical cleaning agent including a chelate at a concentration of between 40 and 70 gms/liter into the interior of the heat exchanger vessel (1), and wherein said improvement is further characterized by the step of using a liquid chemical cleaning agent having a concentration of between 50 and 90 percent of the concentration of the chelate.

3. A method as defined in claim 2, wherein said chelate is EDTA.

4. A method as defined in claim 1, wherein said pressure pulses are generated at a frequency of one pulse every 5 to 15 seconds.

5. A method as defined in claim 1, wherein said pulses are created by injecting pulses of gas into the liquid chemical agent at a pressure between about 2.07-.21 MPa.

6. A method as defined in claim 1, wherein said series of pressure pulses are created by pulses of gas discharged from a pressure pulse generator (39) detachably mounted at a lower portion of the interior of the heat exchanger vessel (1), and wherein the generation of said pressure pulses commences as soon as said generator (39) is submerged in liquid cleaning agent.

7. A method as defined in claim 1, wherein said series of pressure pulses are created by pulses of gas discharged from a pressure pulse generator (39) detachably mounted at a lower portion of the interior of the heat exchanger vessel (1), and wherein the generation of said pressure pulses continues as said cleaning agent is removed until said generator (1) is no longer submerged under said agent.

8. A method as defined in claim 6, wherein the pressure of the gas discharged from the pressure pulse generator (39) increases as the level of chemical cleaning agent within said vessel (1) rises.

9. A method as defined in claim 7, wherein the pressure of the gas discharged from the pressure pulse generator (39) decreases as the level of chemical cleaning agent within said vessel (1) falls.

10. A method for removing sludge and corrosion products (32) as defined in claim 1, wherein said improvement is further characterized by the step of recirculating said cleaning agent through a filter (57) to remove dislodged and fluidized sludge and corrosion products (32) from said agent.

11. An improved method as defined in claim 1, wherein said chelate-containing chemical cleaning agent requires the addition of an oxidation agent within said vessel, and wherein said pressure pulses are generated by discharging a gas that includes oxygen to facilitate the oxidation of said liquid chemical cleaning agent.

12. A method for removing sludge and corrosion products (32) from the interior of a heat exchanger vessel (1) of the type wherein a liquid chemical cleaning agent is effective to remove such sludge and corrosion products when introduced into said vessel (1) and maintained for a residence time of between 13 and 70 hours and then removed, wherein the method comprises the steps of:
introducing a chelating-containing iron agent within the interior of said vessel n times and maintaining the chelate-containing iron agent within the interior of said vessel (1) at a temperature of between about -12.2°C (10°F) and 10°C (50°F) less than 93.3°C (200°F) to prevent said agent from corroding said vessel;
generating a series of pressure pulses within the liquid agent after said agent has been introduced into the interior of said vessel (1) to create shock waves in said liquid dislodge, dissolve and fluidize said sludge and corrosion products (32) ;
removing said liquid chemical cleaning agent after said normal residence time; and
introducing a copper solvent into said vessel only 0.50 n number of times after removing said iron solvent while said series of pressure pulses is generated.

13. A method as defined in claim 12, wherein the residence times of each of said iron solvent and said copper solvent are shortened to 10-30% of their normal residence times.

14. A method as defined in claim 12, further including the steps of introducing and removing an iron solvent rinse agent and a copper solvent rinse agent after said iron and copper solvents have been removed from the heat exchanger vessel for the last time, respectively.

15. A method as defined in claim 12, wherein said liquid agent is a plurality of chelate-containing cleaning agents including an iron solvent formed from an aqueous solution of 150 ± 20 grams of EDTA per liter of water and a copper solvent, wherein the residence time of said copper solvent is between 6-24 hours, further characterized by the steps of recirculating said iron solvent at a temperature of between 65.6-93.3°C while generating pressure pulses within said iron solvent that dislodge, dissolve and fluidize said sludge and corrosion products (32), and recirculating said copper solvent for a residence time of between about 6-16 hours while generating pressure pulses within said copper solvent that dislodge, dissolve and fluidize said sludge and corrosion products (32).

16. An improved method for removing sludge and corrosion products as defined in claim 17, wherein the improvement further comprises lowering the concentration of EDTA in said iron solvent from 150 ± 20 grams per liter of water to 75 ± 20 grams.

## Patentansprüche

1. Verfahren zur Entfernung von Schlamm- und Korrosionsprodukten (32) aus dem Inneren eines Wärmetauscherbehälters (1) der Art, in dem ein flüssiges chemisches Reinigungsmittel wirksam ist, um solche Schlamm- und Korrosionsprodukte zu entfernen, wenn es in einen solchen Behälter (1) eingeführt wird, und für eine Aufenthaltszeit zwischen 13 und 70 Stunden gehalten wird, und dann entfernt wird, in dem das Verfahren die folgenden Schritte umfasst:
ein chelathaltiges Eisenmittel wird in das Innere des Behälters (1) bei einer Temperatur zwischen ungefähr -12,2°C (10°F) und 10°C (50°F) kleiner als 93,3°C (200°F) eingeführt und gehalten, um zu verhindern, daß das Mittel den Behälter korrodiert;
eine Reihe von Druckimpulsen wird in dem flüssigen Mittel erzeugt, nachdem das Mittel in das Innere des Behälters (1) eingeführt worden ist, um Stoßwellen in der Flüssigkeit hervorzurufen, um die Schlamm- und Korrosionsprodukte (32) abzulösen, aufzulösen und zu verflüssigen; und
das flüssige chemische Reinigungsmittels wird nach der normalen Aufenthaltszeit entfernt.

2. Wie in Anspruch 1 definiertes Verfahren, in dem das Verfahren der Art ist, die Einführen eines flüssigen chemischen Reinigungsmittels umfasst, das ein Chelat mit einer Konzentration zwischen 40 und 50 g/Liter in dem Inneren des Wärmetauscherbehälters (1) einschließt, und in dem die Verbesserung weiterhin durch den Schritt gekennzeichnet ist, ein flüssiges chemisches Reinigungsmittel mit einer Konzentration zwischen 50 und 90 Prozent der Konzentration des Chelats zu benutzen.

3. Wie in Anspruch 2 definiertes Verfahren, in dem das Chelat EDTA ist.

4. Wie in Anspruch 1 definiertes Verfahren, in dem die Druckimpulse mit einer Frequenz von einem Impuls alle 5 bis 15 Sekunden erzeugt werden.

5. Wie in Anspruch 1 definiertes Verfahren, in dem die Impulse hervorgerufen werden, indem Gasimpulse mit einem Druck zwischen ungefähr 2,07 - ,21 MPa in das flüssige chemische Mittel eingespritzt werden.

6. Wie in Anspruch 1 definiertes Verfahren, in dem die Druckimpulsreihen von Gasimpulsen hervorgerufen werden, die von einem Druckimpulsgenerator (39) abgegeben werden, der abnehmbar an einem unteren Teil des Inneren des Wärmetauscherbehälters (1) angebracht ist, und in dem die Erzeugung der Druckimpulse beginnt, sobald der Generator (39) in das flüssige Reinigungsmittel eingetaucht wird.

7. Wie in Anspruch 1 definiertes Verfahren, in dem die Druckimpulsreihen durch Gasimpulse hervorgerufen werden, die von einem Druckimpulsgenerator (39) abgegeben werden, der abnehmbar an einem unteren Teil des Inneren des Wärmetauscherbehälters (1) angebracht ist, und in dem die Erzeugung der Druckimpulse andauert, während das Reinigungsmittel entfernt wird, bis der Generator (39) nicht länger in dem Mittel eingetaucht ist.

8. Wie in Anspruch 6 definiertes Verfahren, in dem der Druck des von dem Druckimpulsgenerator (39) abgegebenen Gases sich erhöht, während der Stand des chemischen Reingungsmittels in dem Behälter (1) steigt.

9. Wie in Anspruch 7 definiertes Verfahren, in dem der Druck des von dem Druckimpulsgenerator (39) abgegebenen Gases sich verringert, während der Stand des chemischen Reingungsmittels in dem Behälter (1) fällt.

10. Wie in Anspruch 1 definiertes Verfahren zur Entfernung von Schlamm- und Korrosionsprodukten (32), in dem die Verbesserung weiterhin durch den Schritt gekennzeichnet ist, das Reinigungsmittel durch einen Filter (57) zu rezirkulieren, um abgelöste und verflüssigte Schlamm- und Korrosionsprodukte (32) von dem Mittel zu entfernen.

11. Wie in Anspruch 1 definiertes verbessertes Verfahren, in dem das chelathaltige chemische Reingungsmittel die Zugabe eines Oxidationsmittels in dem Behälter benötigt, und in dem die Druckimpulse durch Abgeben eines Gases erzeugt werden, das Sauerstoff enthält, um die Oxidation des flüssigen chemischen Reinigungsmittels zu ermöglichen.

12. Verfahren zur Entfernung von Schlamm- und Korrosionsprodukten (32) aus dem Inneren eines Wärmetauscherbehälters (1) der Art, in dem ein flüssiges chemisches Reinigungsmittel wirksam ist, um solche Schlamm- und Korrosionsprodukte zu entfernen, wenn es in einen solchen Behälter (1) eingeführt wird, und für eine Aufenthaltszeit zwischen 13 und 70 Stunden gehalten wird, und dann entfernt wird, in dem das Verfahren die folgenden Schritte umfasst:
ein chelathaltiges Eisenmittel wird n mal in das Innere des Behälters eingeführt, und das chelathaltige Eisenmittel wird in dem Inneren des Behälters (1) bei einer Temperatur zwischen ungefähr -12,2°C (10°F) und 10°C (50°F) kleiner als 93,3°C (200°F) gehalten, um zu verhindern, daß das Mittel den Behälter korrodiert;
eine Reihe von Druckimpulsen wird in dem flüssigen Mittel erzeugt, nachdem das Mittel in das Innere des Behälters (1) eingeführt worden ist, um Stoßwellen in der Flüssigkeit hervorzurufen, um die Schlamm- und Korrosionsprodukte (32) abzulösen, aufzulösen und zu verflüssigen; und
das flüssige chemische Reinigungsmittel wird nach der normalen Aufenthaltszeit entfernt; und
ein Kupferlösungsmittel wird in den Behälter mit einer Anzahl von nur 0,50 n mal eingeführt, nachdem das Eisenlösungsmittel entfernt worden ist, während die Druckimpulsreihe erzeugt wird.

13. Wie in Anspruch 1 definiertes Verfahren, in dem die Aufenthaltszeiten von dem Eisenlösungsmittel und dem Kupferlösungsmittel auf 10-30% ihrer normalen Aufenthaltszeiten gekürzt werden.

14. Wie in Anspruch 12 definiertes Verfahren, das weiterhin die Schritte einschließt, ein Eisenlösungsmittelspülmittel und ein Kupferlösungsmittelspülmittel einzuführen und zu entfernen, nachdem die Eisen- und Kupferlösungsmittel von dem Wärmetauscherbehälter jeweils zum letzten Mal entfernt worden sind.

15. Wie in Anspruch 12 definiertes Verfahren, in dem das flüssige Mittel eine Vielzahl von chelathaltigen Reinigungsmitteln ist, die ein Eisenlösungsmittel einschließen, das aus einer wässrigen Lösung von 150 ± 20 Gramm EDTA pro Liter Wasser und einem Kupferlösungsmittel gebildet ist, in dem die Aufenthaltszeit des Kupferlösungsmittels zwischen 6-24 Stunden ist, das weiterhin durch die Schritte gekennzeichnet ist, das Eisenlösungsmittel bei einer Temperatur zwischen 65,6-93,3°C zu rezirkulieren, während Druckimpulse in dem Eisenlösungsmittel erzeugt werden, die die Schlamm- und Korrosionsprodukte (32) ablösen, auflösen und verflüssigen, und das Kupferlösungsmittel für eine Aufenthaltszeit zwischen ungefähr 6-16 Stunden zu rezirkulieren, während Druckimpulse in dem Kupferlösungsmittel erzeugt werden, die die Schlamm- und Korrosionsprodukte (32) ablösen, auflösen und verflüssigen.

16. Wie in Anspruch 15 definiertes Verfahren zur Entfernung von Schlamm- und Korrosionsprodukten, in dem die Verbesserung weiterhin umfasst, die EDTA-Konzentration in dem Eisenlösungsmittel von 150 ± 20 Gramm pro Liter Wasser auf 75 ± 20 Gramm zu verringern.

## Revendications

1. Procédé pour retirer de la boue et des produits de corrosion (32) de l'intérieur de la cuve (1) d'un échangeur de chaleur du type dans lequel un agent liquide de nettoyage chimique sert à éliminer cette boue et ces produits de corrosion quand il est introduit dans ladite cuve (1), maintenu dans cette cuve pendant un temps de résidence compris entre 13 et 70 heures, puis retiré,
sachant que ledit procédé comprend les étapes consistant à :
- introduire un agent solvant du fer et contenant un chélatant à l'intérieur de ladite cuve (1) et l'y maintenir à une température inférieure d'entre environ -12,2 °C (10°F) à +10°C (50°F) à 93,3°C (200°F) pour empêcher ledit agent de corroder ladite cuve,
- produire une série d'impulsions de pression dans l'agent liquide après que ledit agent a été introduit à l'intérieur de ladite cuve (1) pour créer des ondes de choc dans ledit liquide afin de déloger, dissoudre et fluidiser ladite boue et lesdits produits de corrosion (32), et
- retirer ledit agent liquide de nettoyage chimique après ledit temps de résidence normal.

2. Procédé selon la revendication 1, dans lequel le procédé est du type qui implique l'introduction, à l'intérieur de la cuve (1) d'un échangeur de chaleur, d'un agent liquide de nettoyage chimique contenant un chélatant à une concentration comprise entre 40 et 70 g/litre, et dans lequel ladite amélioration est en outre caractérisée par l'étape consistant à utiliser un agent liquide de nettoyage chimique ayant une concentration d'entre 50 et 90 % de la concentration du chélatant.

3. Procédé selon la revendication 2, dans lequel ledit chélatant est de l'EDTA.

4. Procédé selon la revendication 1, dans lequel lesdites impulsions de pression sont produites à la fréquence de une impulsion toutes les 5 à 15 secondes.

5. Procédé selon la revendication 1, dans lequel lesdites impulsions sont produites par envoi d'impulsions de gaz dans l'agent liquide de nettoyage chimique à une pression comprise entre environ 2,07 et 6,21 MPa.

6. Procédé selon la revendication 1, dans lequel ladite série d'impulsions de pression est produite par des impulsions de gaz déchargé par un générateur (39) d'impulsions de pression qui est monté de manière amovible en une partie inférieure de l'intérieur de la cuve (1) de l'échangeur de chaleur, et dans lequel la production desdites impulsions de pression débute dès que ledit générateur (39) est immergé dans ledit agent liquide de nettoyage.

7. Procédé selon la revendication 1, dans lequel ladite série d'impulsions de pression est produite par des impulsions de gaz déchargé par un générateur (39) d'impulsions de pression qui est monté de manière amovible en une partie inférieure de l'intérieur de la cuve (1) de l'échangeur de chaleur, et dans lequel la production desdites impulsions de pression se poursuit quand ledit agent de nettoyage est retiré, jusqu'à ce que ledit générateur (39) ne soit plus submergé par ledit agent.

8. Procédé selon la revendication 6, dans lequel la pression du gaz déchargé par le générateur (39) d'impulsions de pression augmente à mesure qu'augmente le niveau de l'agent de nettoyage chimique à l'intérieur de ladite cuve (1).

9. Procédé selon la revendication 7, dans lequel la pression du gaz déchargé par le générateur (39) d'impulsions de pression diminue à mesure que diminue le niveau de l'agent de nettoyage chimique à l'intérieur de ladite cuve (1).

10. Procédé pour retirer de la boue et des produits de corrosion (32) selon la revendication 1, dans lequel ladite amélioration est en outre caractérisée par l'étape consistant à faire recirculer ledit agent de nettoyage à travers un filtre (57) pour éliminer dudit agent la boue et les produits de corrosion (32) qui ont été délogés et fluidisés.

11. Procédé selon la revendication 1, dans lequel ledit agent de nettoyage chimique qui contient un chélatant nécessite l'addition d'un agent oxydant dans ladite cuve, et dans lequel lesdites impulsions de pression sont par produites par décharge d'un gaz qui contient de l'oxygène afin de faciliter l'oxydation dudit agent liquide de nettoyage chimique.

12. Procédé pour retirer de la boue et des produits de corrosion (32) de l'intérieur de la cuve (1) d'un échangeur de chaleur du type dans lequel un agent liquide de nettoyage chimique sert à éliminer cette boue et ces produits de corrosion quand il est introduit dans ladite cuve (1), maintenu dans cette cuve pendant un temps de résidence compris entre 13 et 70 heures, puis retiré,
sachant que ledit procédé comprend les étapes consistant à :
- introduire n fois un agent solvant du fer et contenant un chélatant à l'intérieur de ladite cuve et maintenir l'agent solvant du fer et contenant un chélatant à l'intérieur de ladite cuve (1) à une température inférieure d'entre environ -10,2 °C (10°F) à +10°C (50°F) à 93,3°C (200°F) pour empêcher ledit agent de corroder ladite cuve,
- produire une série d'impulsions de pression dans l'agent liquide après que ledit agent a été introduit à l'intérieur de ladite cuve (1) pour créer des ondes de choc dans ledit liquide afin de déloger, dissoudre et fluidiser ladite boue et lesdits produits de corrosion (32),
- retirer ledit agent liquide de nettoyage chimique après ledit temps de résidence normal, et
- introduire un solvant du cuivre dans ladite cuve, 0,50 n fois seulement et après avoir retiré ledit solvant du fer, tout en produisant ladite série d'impulsions de pression.

13. Procédé selon la revendication 12, dans lequel le temps de résidence de chacun desdits solvants, celui du fer et celui du cuivre, est raccourci à une valeur comprise entre 10 et 30% de leur temps de résidence normal.

14. Procédé selon la revendication 12, comprenant en outre les étapes consistant à introduire et retirer un agent de rinçage du solvant du fer et un agent de rinçage du solvant du cuivre après que lesdits solvants du fer et du cuivre ont été respectivement retirés de la cuve de l'échangeur de chaleur pour la dernière fois.

15. Procédé selon la revendication 12, dans lequel ledit agent liquide est une pluralité d'agents de nettoyage contenant un chélatant, incluant un solvant du fer formé à partir d'une solution aqueuse contenant 150± 20 grammes d'EDTA par litre d'eau et un solvant du cuivre, sachant que le temps de résidence dudit solvant du cuivre est compris entre 6 et 24 heures, caractérisé en outre par les étapes consistant à faire recirculer ledit solvant du fer à une température comprise entre 65,6 et 93,3 °C, tout en produisant des impulsions de pression à l'intérieur dudit solvant du fer qui délogent, dissolvent et fluidisent ladite boue et lesdits produits de corrosion (32), et à faire recirculer ledit solvant du cuivre pendant un temps de résidence compris entre environ 6 et 16 heures tout en produisant des impulsions de pression à l'intérieur dudit solvant du cuivre qui délogent, dissolvent et fluidisent ladite boue et lesdits produits de corrosion (32).

16. Procédé pour retirer de la boue et des produits de corrosion selon la revendication 15, dans lequel l'amélioration comprend en outre une diminution de la concentration de l'EDTA dans ledit solvant du fer de 125 ± 20 grammes par litre d'eau à 75 ± 20 grammes.
